# EUROPEAN PATENT APPLICATION

(11) **EP 2 472 172 A1**
(43) Date of publication of application: **04.07.2012**
(21) Application number: 10812009.8
(22) Date of filing: 27.08.2010
(51) Int. Cl.: F21S 2/00, G02B 6/00, G02F 1/13357, F21Y 101/02, F21Y 103/00

(54) **LIGHT GUIDE PLATE UNIT, SURFACE LIGHT SOURCE DEVICE, AND DISPLAY DEVICE**

(30) Priority: 27.08.2009 JP 2009197284
(71) Applicant: Sharp Kabushiki Kaisha, Osaka-shi, Osaka 545-8522 (JP)
(72) Inventor: HAYASHI, Tokumi, Osaka-shi, Osaka 545-8522 (JP); HATSUDA, Kenichi, Osaka-shi, Osaka 545-8522 (JP)
(74) Representative: Müller-Boré & Partner Patentanwälte
(86) International application number: PCT/JP2010/064621
(87) International publication number: WO 2011/024960

(57) **Abstract**

A light guide plate unit (10) includes: a light guide plate (1) having a light incidence section (1f) provided along at least one side face (1a) of the light guide plate; and a plurality of light sources (2a,2b) that cause light to enter the light guide plate (1) through the light incidence section (1f), the light incidence section (1f) including: a plurality of light incidence planes (1d) arranged along the side face (1a); a plurality of light guide sections (1c) formed in such a manner as to protrude outward from spaces between the plurality of light incidence planes (1d) on the side face (1a), respectively; and a plurality of light incidence planes (1e) positioned as protruding surfaces of the plurality of light guide sections (1c), respectively, the plurality of light sources (2a,2b) including: a plurality of light sources (2a) provided in such a manner as to face the plurality of light incidence planes (1d), respectively; and a plurality of light sources (2b) provided in such a manner as to face the plurality of light incidence planes (1e), respectively. This makes it possible to allow an arrangement of a large number of light sources, to sustain output from the light sources, and to contribute to a reduction in size.

## Description

### Technical Field

The present invention relates to a light guide plate unit including a light guide plate and light sources, a surface light source device including such a light guide plate unit, and a display device including such a light guide plate unit.

### Background Art

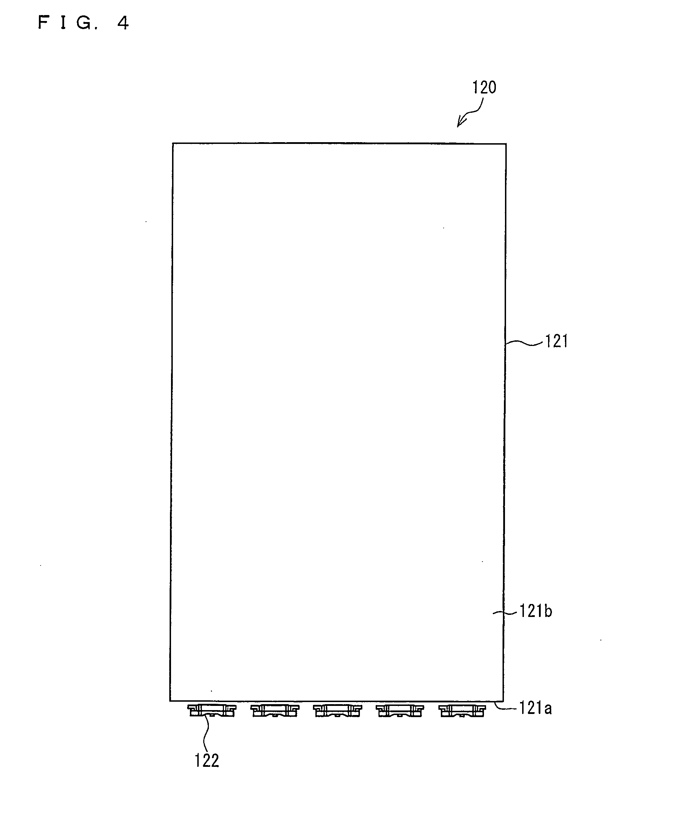

As surface light source devices for use in backlight mechanisms of liquid crystal display devices, etc., surface light source devices using light guide plates are known. Fig. 4 is a plan view showing an example of a light guide plate in a conventional surface light source device. A light guide plate 121 provided in a conventional surface light source device 120 has an incidence plane 121a that extends along a short side of the plate, and lets in light from light sources 122 arranged in a line along the incidence plane 121a. Also, the light guide plate 121 has an exit plane 121b that is one of those two end faces of the light guide plate 121 along a thickness direction, and emits, through the exit plane 121b, the light let in through the incidence plane 121a.

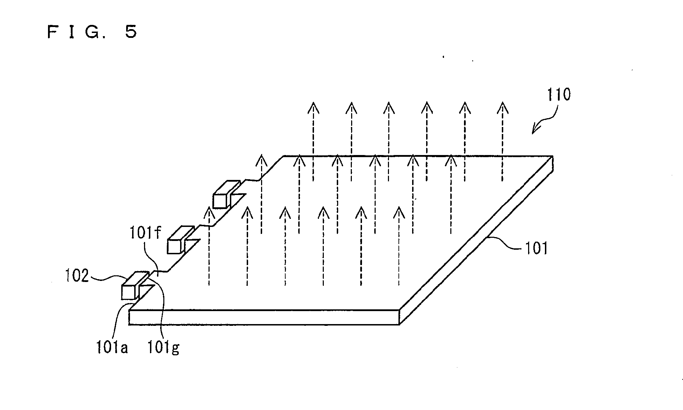

In addition, Patent Literature 1 discloses another example of a light guide plate. Fig. 5 is a plan view showing another example of a light guide plate in a conventional surface light source device. As shown in Fig. 5, Patent Literature 1 discloses that a light guide plate 101 for use in a backlight 110 includes: a side face 101a facing light sources 102; and trapezoidal protruding sections 101f, formed on the side face 101a, each of which protrudes substantially in an inverted trapezoidal shape and each of which has a protruding plane 101g that functions as a light incidence plane facing its corresponding light source.

### Citation List

Patent Literature 1
   Japanese Patent Application Publication, Tokukai, No. 2004-87408 A (Publication Date: March 18, 2004)

### Summary of Invention

### Technical Problem

However, since, in such a conventional technology, the light sources are arranged in a line along the incidence plane, the number of light sources that can be arranged is undesirably limited in view of the width of each light source and the arrangement of patterns on a flexible print circuit (FPC), etc. Also, an arrangement of a large number of light sources narrows the space between adjacent light sources and therefore causes the light sources to be affected by heat generated from each other, so that there is an undesirable decrease in output from the light sources. In addition, widening of the space between the adjacent light sources brings about an undesirable increase in size of the device.

The present invention has been made in view of the above problems with the conventional technology, and it is an object of the present invention to provide (i) a light guide plate unit which allows an arrangement of a large number of light sources, which sustains output from the light sources, and which contributes to a reduction in size, (ii) a surface light source device including such a light guide plate unit, and (iii) a display device including such a light guide plate unit.

### Solution to Problem

In order to solve the above problems, a light guide plate unit according to the present invention includes: a light guide plate having a light incidence section provided along at least one side face of the light guide plate; and a plurality of light sources that cause light to enter the light guide plate through the light incidence section, the light incidence section including: a plurality of first light incidence planes arranged along the side face; a plurality of light guide sections formed in such a manner as to protrude outward from spaces between the plurality of first light incidence planes on the side face, respectively; and a plurality of second light incidence planes positioned as protruding surfaces of the plurality of light guide sections, respectively, the plurality of light sources including: a plurality of first light sources provided in such a manner as to face the plurality of first light incidence planes, respectively; and a plurality of second light sources provided in such a manner as to face the plurality of second light incidence planes, respectively.

With the above configuration, the plurality of light sources include the first light sources arranged along the side face of the light guide plate in such a manner as to face the first light incidence planes and the second light sources arranged on protruding surface of the light guide sections in such a manner as to face the second light incidence planes. In this way, the second light sources are located further away from the side face of the light guide plate than the first light sources. Therefore, the light sources are arranged in two lines along the side face of the light guide plate. This makes it possible to arrange a large number of light sources, thus making it possible to increase the luminance of light that is emitted from the light guide plate. Also, since it is possible to suppress an increase in size of the side face of the light guide plate while arranging a large number of light sources, a contribution can be made to a reduction in size of the light guide plate unit.

In addition, since the light guide sections are provided between the multiple first light incidence planes, the first light incidence planes and the light guide sections are alternately arranged. Consequently, the space between adjacent first light sources and the space between adjacent second light sources can be widened. Furthermore, because the first light sources and the second light sources are arranged in two lines along the side face of the light guide plate, the spaces between these light sources can be widened. This makes it possible to prevent the light sources from being affected by heat generated from each other, thus making it possible to sustain output from the light sources.

Further, a surface light source device according to the present invention includes such a light guide plate unit as that described above. This makes it possible to achieve a highly reliable surface light source device which allows an arrangement of a large number of light sources and which can sustain output from the light sources, and to contribute to a reduction in size of the surface light source device.

Further, a display device according to the present invention includes such a surface light source device as that described above. This makes it to achieve a display device including a highly reliable surface light source device which allows an arrangement of a large number of light sources and which can sustain output from the light sources, and to contribute to a reduction in size of the display device.

### Advantageous Effects of Invention

As described above, a light guide plate unit according to the present invention includes: a light guide plate having a light incidence section provided along at least one side face of the light guide plate; and a plurality of light sources that cause light to enter the light guide plate through the light incidence section, the light incidence section including: a plurality of first light incidence planes arranged along the side face; a plurality of light guide sections formed in such a manner as to protrude outward from spaces between the plurality of first light incidence planes on the side face, respectively; and a plurality of second light incidence planes positioned as protruding surfaces of the plurality of light guide sections, respectively, the plurality of light sources including: a plurality of first light sources provided in such a manner as to face the plurality of first light incidence planes, respectively; and a plurality of second light sources provided in such a manner as to face the plurality of second light incidence planes, respectively. This makes it possible to allow an arrangement of a large number of light sources, to sustain output from the light sources, and to contribute to a reduction in size.

Additional objects, features, and strengths of the present invention will be made clear by the description below. Further, the advantages of the present invention will be evident from the following explanation in reference to the drawings.

### Brief Description of Drawings

Fig. 1

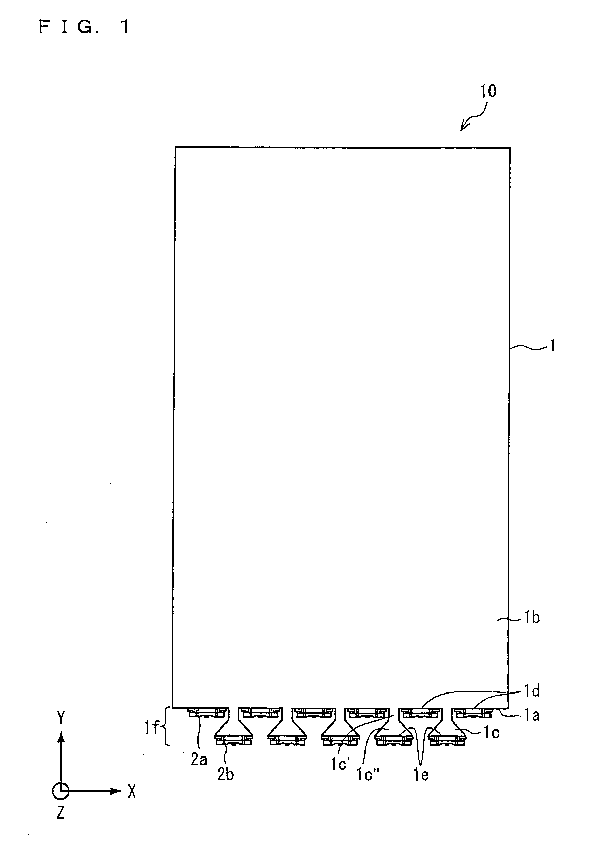

   Fig. 1 is a plan view showing a light guide plate unit according to an embodiment of the present invention.
Fig. 2

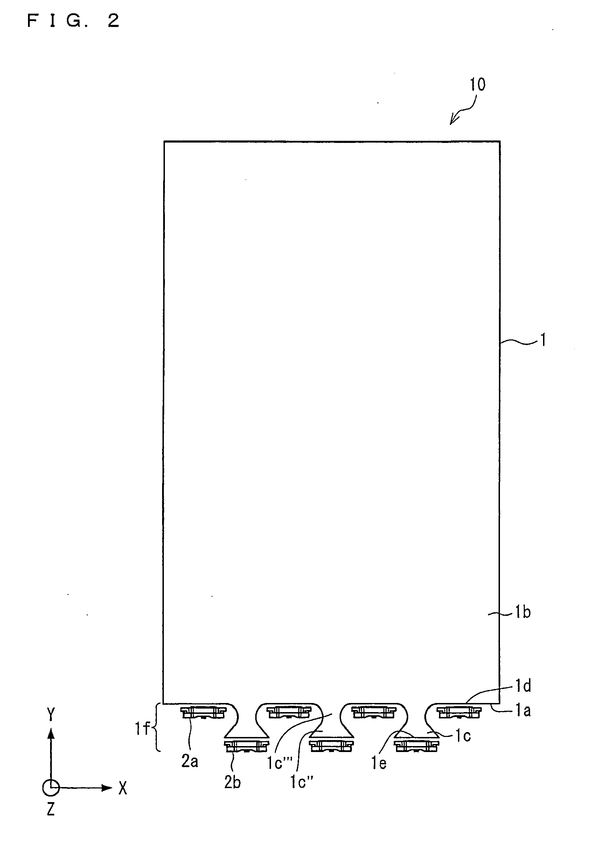

   Fig. 2 is a plan view showing a modification of the light guide plate unit according to an embodiment of the present invention.
Fig. 3

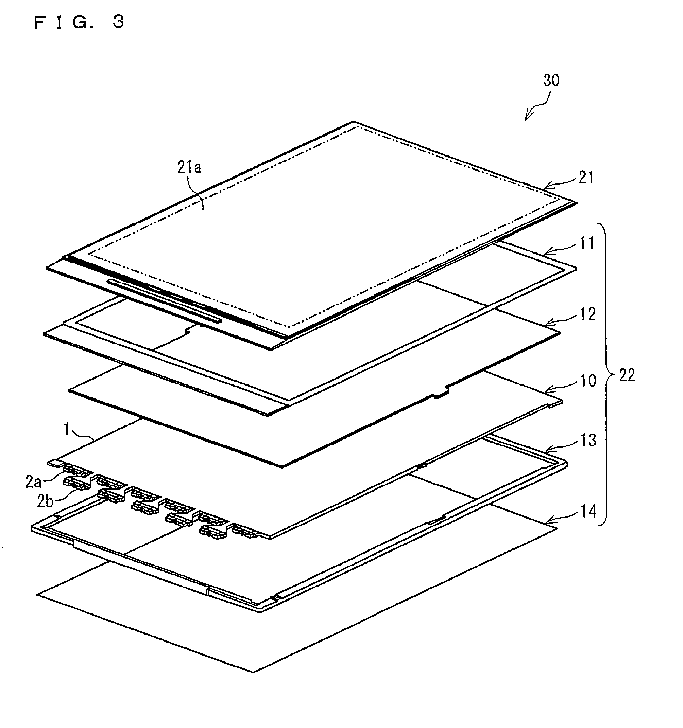

   Fig. 3 is a diagram showing a configuration of a liquid crystal display device according to an embodiment of the present invention.
Fig. 4
   Fig. 4 is a plan view showing an example of a light guide plate in a conventional surface light source device.
Fig. 5
   Fig. 5 is a plan view showing another example of a light guide plate in a conventional surface light source device.

### Description of Embodiments

An embodiment of the present t invention is described in detail below. Fig. 1 is a plan view showing a light guide plate unit according to an embodiment of the present invention. The present embodiment describes a light guide plate unit 10 constituting a backlight unit 22 (surface light source device) provided in a liquid crystal display device 30.

### (Light Guide Plate Unit 10)

The light guide plate unit 10 mainly includes a light guide plate 1, a plurality of light sources 2a (first light sources), and a plurality of light sources 2b (second light sources).

The light guide plate 1 is a plate that converts incident light into a surface light source, and can be made of a resin member, glass, or the like. Examples of the resin member include polycarbonate (PC), polymethacrylic acid methyl resin (PMMA), etc. It should be noted here that a width direction, length direction, and thickness direction of the light guide plate 1 are represented as an X direction, a Y direction, and a Z direction, respectively. The light guide plate 1 lets in light through a side face 1a that is one of those two end faces of the light guide plate 1 along the Y direction. The light guide plate 1 converts the incident light into light, for example, by repeatedly refracting and reflecting the incident light, and the resulting light exits through an exit plane 1b that is one of those two end faces of the light guide plate 1 along the Z direction.

Provided on the side face 1a of the light guide plate 1 is a light incidence section 1f that serves to let in light through the side face 1a. The light incidence section 1f includes a plurality of light incidence planes 1d (first light incidence planes), a plurality of light guide sections 1c, and a plurality of light incidence planes 1e (second light incidence planes).

The light incidence planes 1d are arranged along the side face 1a, and the light incidence planes 1d let in light from the light sources 2a, respectively. Also, the light guide sections 1c are formed in spaces between the plurality of light incidence planes 1d, respectively. That is, the light incidence planes 1d and the light guide sections 1c are alternately arranged.

The light guide sections 1c are formed in such a manner as to protrude out of the light guide plate 1 from the spaces between the light incidence planes 1d on the side face 1a. As shown in Fig. 1, each of the light guide sections 1c includes (i) a columnar region 1c' extending from the side face 1a and (ii) a region 1c" protruding further outward from the columnar region 1c' and having a shape that gets wider toward the outside. It should be noted here that the light guide section 1c is described by taking, as an example, a case where the region 1c has a cuboidal shape, and the region 1c" has a trapezoidal quadratic prism shape that gets wider toward the outside. The light guide sections 1c needs only be made of a material capable of guiding light, and may be formed integrally with the light guide plate 1 by being made of the same material as that of which the light guide plate 1 is made, but the light guide section 1c is not limited to such an example.

Each of the light incidence planes 1e is that surface of the trapezoidal quadratic prism shaped region 1c" of its corresponding light guide section 1c which protrudes outward away from the side face 1a, which is parallel to the side face 1a, and which lets in light from its corresponding light source 2b. The light guide section 1c guide light incident on the light incidence planes 1e toward the light guide plate 1.

Since, in the present embodiment, each of the light guide sections 1c includes a cuboidal region 1c' extending from the side face 1a as described above, the light guide sections 1c can be arranged without interfering with the arrangement of the light sources 2a. Also, since each of the light guide sections 1c includes a region 1c" having a trapezoidal quadric prism shape that gets wider toward the outside, it is possible to reliably allow light from the light sources 2b to enter the light guide sections 1c and to efficiently guide the light into the light guide plate 1. Therefore, since the light guide sections 1c are shaped as shown in Fig. 1, it is possible to efficiently guide the light from the light sources 2b into the light guide plate 1. Also, since the light guide sections 1c are shaped as described above, each of the light sources 2a and 2b can surely be placed at enough space from light sources adjacent thereto. This makes it unlikely for each of the light sources to be affected by heat generated from light sources there around, thus making it possible to sustain output from the light sources.

It should be noted that the shape of each of the light guide sections 1c is not limited to the shape described above. Each of the light guide sections 1c needs only have such a shape that does not interfere with the arrangement of the light sources 2a and that guides light from the light sources 2b into the light guide plate 1. For example, the light guide sections 1c may each have a columnar shape, a conical shape, or the like. Examples of the columnar shape include a cylindrical column, etc., and examples of the conical shape include a circular cone, etc.

In addition, the shape of each of the light guide sections 1c may be constituted by a columnar region extending out of the light guide plate from the side face and a region protruding further outward from the columnar region and having a shape that gets wider toward the outside. For example, the light guide sections 1c may be shaped as shown in Fig. 2. Fig. 2 is a plan view showing a modification of the light guide plate unit according to the present embodiment. Each of the light guide sections 1c in Fig. 2 includes (i) a columnar region 1c"' extending out of the light guide plate 1 from the side face 1a and (ii) a region 1c" protruding further outward from the columnar region 1c"' and having a shape that gets wider toward the outside. It should be noted that the columnar region in each of the light guide sections may be constant in width as shown in Fig. 1 or may vary in width as shown in Fig. 2.

The light sources 2a and 2b are light sources that cause light to enter the light guide plate 1. Usable examples of the light sources 2a and 2b include point sources such as LEDs, line sources such as cold cathode tubes (CCFT), etc. The plurality of light sources 2a, provided in such a manner as to face the light incidence planes 1d, cause light to enter the light guide plate 1 through the light incidence planes 1d, respectively. On the other hand, the plurality of light sources 2b, provided in such a manner as to face light incidence planes 1e, cause light to enter the light guide sections 1c through the light incidence planes 1c, respectively, thereby causing the light to enter the light guide plate 1. That is, the light sources 2b are located further away from the side face 1a than the light sources 2b, so that the light sources 2a and the light sources 2b are arranged in two lines along the side face 1a. Hence, the light guide plate unit 10 allows an efficient arrangement of a .large number of light sources 2a and 2b. This makes it possible to increase the luminance of light that is emitted from the light guide plate 1.

Since, in the present embodiment, the light sources 2a and the light sources 2b are not arranged in a line along the side face 1a, the spaces between these light sources can be widened. Also, the space between adjacent light sources 2a and the space between adjacent light sources 2b can be widened by alternately arranging the light sources 2a and the light guide sections 1c. This makes it possible to prevent the light sources 2a and the light sources 2b from being affected by heat generated from each other, thus making it possible to sustain output from the light sources 2a and 2b. Therefore, the light guide plate unit 10 can be made highly reliable.

The configuration of the light sources 2a and 2b as described above makes it possible to make the size of the light guide plate 1 according to the present embodiment along the X direction remarkably smaller than that of a conventional light guide plate provided with the same number of light sources. Although there is a slight increase in the size of the light guide plate 1 along the Y direction, such an increase in the size of the light guide plate 1 along the Y direction in the present embodiment is far smaller than an increase in the size of the conventional light guide plate along the X direction with the light sources arranged in a line. Hence, the area of the light guide plate 1 can be made smaller than that of the conventional light guide plate provided with the same number of light sources. This contributes to reducing the size of the light guide plate unit 10 and the size of a device or the like including the light guide plate unit 10.

Although the present embodiment has been described by taking, as an example, a case where the light incidence section 1f is provided on the side face 1a, which is a single side face of the light guide plate 1, the present embodiment is not limited to such an example, and it is possible to provide a light incidence section on plural side faces of the light guide plate. That is, the light guide plate may let in light through the plural side faces thereof. For example, the light incidence section may be provided on two side faces: one of those two end faces of the light guide plate along a length direction and one of those two end faces of the light guide plate along a width direction; or both of the two end faces of the light guide plate along the length direction or the width direction. Besides, the light incidence section can be provided on three or all of the side faces. In these cases, the arrangement of light sources on each side face can be configured as described above. This makes it possible to further increase the luminance of light that is emitted from the light guide plate and to prevent the area of the light guide plate from increasing even when a large number of light sources are provided, thus making it possible to reduce the size of a light guide plate unit and the size of a surface light source device, a display device, etc. including the light guide plate unit.

### (Liquid Crystal Display Device 30)

Next, a liquid crystal display device 30 is described. Fig. 3 is a diagram showing a configuration of a liquid crystal display device according to an embodiment of the present invention.

The liquid crystal display device 30 mainly includes a liquid crystal panel 21 and a backlight unit 22. The backlight unit 22 includes a light blocking tape 11, an optical sheet 12, a light guide plate unit 10, a resin frame 13, and a reflecting sheet 14.

The liquid crystal panel 21 includes a display surface 21a, and the backlight unit 22 is placed opposite the display surface 21a. The backlight unit 22 is a surface light source device that emits light toward the display surface 21a.

The light blocking tape 11 is a tape that serves to stick the liquid crystal panel 21 and the backlight unit 22 together. The optical sheet 12 is a sheet constituted by a prism sheet for focusing light, a diffusing sheet for diffusing the light, etc. Uniform plane emission is achieved through the optical sheet 12 focusing and diffusing light emitted from the light guide plate 1. The resin frame 13 is a frame that serves to hold the light guide plate unit 10, the optical sheet 12, etc. The reflecting sheet 14 is a sheet by which light emitted from the light guide plate 1 through a plane opposite the exit plane 1b is reflected back into the light guide plate 1. As such, the reflecting sheet 14 can guide the light inside of the light guide plate 1 toward the exit plane 1b.

Since the backlight unit 22 provided in the liquid crystal display device 30 has such a light guide plate unit 10 described above, the backlight unit 22 is a highly reliable backlight unit which emits light of high luminance toward the liquid crystal panel 21, which can sustain output from the light sources 2a and 2b, and which can contribute to a reducing in size of the liquid crystal display device 30.

It should be noted that a light guide plate unit according to the present invention can be suitably used in various types of lighting device, etc, as well as in such a backlight unit provided in a liquid crystal display device.

### (Additional Remarks)

The present invention is not limited to the description of the embodiments above, but may be altered by a skilled person within the scope of the claims. An embodiment based on a proper combination of technical means disclosed in different embodiments is encompassed in the technical scope of the present invention.

For example, the light guide plate unit according the present invention is preferably configured such that each of the light guide sections has a columnar shape or a conical shape or includes (i) a columnar region extending out of the light guide plate from the side face and (ii) a region protruding further outward from the columnar region and having a shape that gets wider toward an outside.

With the above configuration, the light guide sections can efficiently guide light from the second light sources into the light guide plate.

Further, when each of the light guide sections includes a columnar region extending out of the light guide plate from the side face, the light guide sections can be arranged without interfering with the arrangement of the first light sources. Alternatively, when each of the light guide sections includes a region having a shape that gets wider toward the outside, the light guide sections allows light from the second light sources to surely enter the light guide sections and can efficiently guide the light into the light guide plate. Therefore, the light guide sections can efficiently guide light from the second light sources into the light guide plate when each of the light guide sections include (i) a region extending out of the light guide plate from the side face and (ii) a region protruding further outward from the columnar region and having a shape that gets wider toward the outside.

Further, the light guide plate unit according to the present invention is preferably configured such that the light incidence section is provided along plural side faces of the light guide plate.

The above configuration makes it possible to arrange a large number of light sources on plural sides of the light guide plate while sustaining output from the light sources, thus making it possible to further increase the luminance of light that is emitted from the light guide plate, and makes it possible to suppress an increase in size of a side face of the light guide plate, thus contributing to a reduction in of the light guide plate unit.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

Since the present invention is high in luminance, can sustain output from light sources, and can contribute to a reduction in size, the present invention can be suitably used in a surface light source device that irradiates a display device or the like.

### Reference Signs List

- 1: Light guide plate
- 2a: Light source (first light source)
- 2b: Light source (second light source)
- 1c: Light guide section
- 1d: Light incidence plane (first light incidence plane)
- 1e: Light incidence plane (second light incidence plane)
- 1f: Light incidence section
- 10: Light guide plate unit
- 22: Backlight unit (surface light source device)
- 30: Liquid crystal display device (display device)

## Claims

1. A light guide plate unit comprising:
a light guide plate having a light incidence section provided along at least one side face of the light guide plate; and
a plurality of light sources that cause light to enter the light guide plate through the light incidence section,
the light incidence section including:
a plurality of first light incidence planes arranged along the side face;
a plurality of light guide sections formed in such a manner as to protrude outward from spaces between the plurality of first light incidence planes on the side face, respectively; and
a plurality of second light incidence planes positioned as protruding surfaces of the plurality of light guide sections, respectively,
the plurality of light sources including:
a plurality of first light sources provided in such a manner as to face the plurality of first light incidence planes, respectively; and
a plurality of second light sources provided in such a manner as to face the plurality of second light incidence planes, respectively.

2. The light guide plate unit as set forth in claim 1, wherein each of the light guide sections has a columnar shape or a conical shape or includes (i) a columnar region extending out of the light guide plate from the side face and (ii) a region protruding further outward from the columnar region and having a shape that gets wider toward an outside.

3. The light guide plate unit as set forth in claim 1 or 2, wherein the light incidence section is provided along plural side faces of the light guide plate.

4. A surface light source device comprising a light guide plate unit as set forth in any one of claim 1 to 3.

5. A display device comprising a surface light source device as set forth in claim 4.
